# EUROPEAN PATENT APPLICATION

(11) **EP 3 992 016 A1**
(43) Date of publication of application: **04.05.2022**
(21) Application number: 20849585.3
(22) Date of filing: 08.07.2020
(51) Int. Cl.: B60L 53/126, B60L 53/66, B60L 53/30

(54) **PAIRING CONTROL METHOD AND DEVICE IN POWER TRANSMISISON**

(30) Priority: 05.08.2019 US 201962882744 P; 17.09.2019 US 201962901477 P; 06.07.2020 KR 20200082546
(71) Applicant: HYUNDAI MOTOR COMPANY, Seoul 06797 (KR); Kia Corporation, Seocho-gu Seoul 06797 (KR); Myongji University Industry and Academia Cooperation Foundation, Yongin-si, Gyeonggi-do 17058 (KR)
(72) Inventor: SHIN, Min Ho, Yongin-si, Gyeonggi-do 17058 (KR)
(74) Representative: Isarpatent
(86) International application number: PCT/KR2020/008952
(87) International publication number: WO 2021/025306

(57) **Abstract**

Disclosed is a pairing control method performed by a supply equipment communication controller (SECC) that controls power supply to an electrical vehicle. The pairing control method according to the present invention may comprise the steps of: performing a charging session start procedure with an electrical vehicle (EV); exchanging one or more pairing messages with the electrical vehicle; generating information on one or more alternative SECCs when pairing with the electrical vehicle fails; and transmitting a pairing response message including information on the one or more alternative SECCs to the electrical vehicle.

## Description

### TECHNICAL FIELD

The present disclosure relates to a method and apparatus for controlling a pairing in a power transfer and, more particularly, to a method and apparatus for controlling the pairing performed for a conductive or wireless power transfer to an electric vehicle.

### BACKGROUND ART

An electric vehicle (EV) is driven by an electric motor powered by a battery and has advantages of reducing pollutants such as exhaust gas and noise, less breakdown, longer life, and simpler driving operation compared with a conventional combustion engine vehicle.

The EVs are classified into hybrid electric vehicles (HEVs), plug-in hybrid electric vehicles (PHEVs), and electric vehicles (EVs), based on a driving source. The HEV has an engine as a main power and a motor as an auxiliary power. The PHEV has a main power motor and an engine used when a battery is discharged. The EV has a motor, but the EV does not have an engine.

An electric vehicle charging system may be defined as a system that charges a battery mounted in an electric vehicle using power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

An electric vehicle charging control is performed through a communications protocol between the EV and a charging station. In detail, the power transfer from the charging station to the EV is performed after a pairing is established between an electric vehicle communication controller (EVCC) of the EV and a supply equipment communication controller (SECC) of the charging station. Thus, it is necessary to enhance a success probability of the pairing between the EVCC and the SECC.

### DISCLOSURE OF INVENTION

### TECHNICAL PROBLEM

Provided is a pairing control method performed by a supply equipment communication controller (SECC) controlling a power transfer to an electric vehicle (EV).

Provided is a supply equipment communication controller (SECC) controlling a power transfer to an electric vehicle (EV) using the pairing control method.

Provided is a power transfer control method performed by an electric vehicle (EV).

### TECHNICAL SOLUTION

According to an aspect of an exemplary embodiment, a pairing control method performed by the SECC controlling a power transfer to the EV includes: performing an initiation of a charging session with the EV; exchanging pairing messages with the EV; generating information on at least one alternative SECC when a pairing with the EV fails; and transmitting a pairing response message including the information on the at least one alternative SECC to the EV.

The SECC may communicate with at least one other SECC using an Inter-Supply Equipment Protocol (ISEP).

The pairing control method may further include an operation of acquiring the information on the at least one alternative SECC by using the Inter-Supply Equipment Protocol (ISEP).

The operation of generating information on the at least one alternative SECC when a pairing with the EV fails may include an operation of examining SECC information included in an event announcement message that is broadcast by each of the at least one other SECC.

The information on the at least one alternative SECC may include at least one of: a service set identifier (SSID), a basic service set identifier (BSSID), or a pair of IP address and port number.

The ISEP may include at least one of: a proactive type message, a reactive type message, or a triggering type message.

The reactive type message may be optionally used when the proactive type message cannot fix a pairing failure.

The triggering type message may be used when a pairing signal is generated by an electric vehicle supply equipment (EVSE).

According to another aspect of an exemplary embodiment, a supply equipment communication controller (SECC) controlling a power transfer to an electric vehicle (EV) includes a processor and a memory storing at least one instruction to be executed by the processor.

The at least one instruction, when executed by the processor, causes the processor to: perform an initiation of a charging session with the EV; exchange at least one pairing messages with the EV; generate information on at least one alternative SECC when a pairing with the EV fails; and transmit a pairing response message including the information on the at least one alternative SECC to the EV.

The SECC may communicate with at least one other SECC using an Inter-Supply Equipment Protocol (ISEP).

The at least one instruction may include instructions, when executed by the processor, causing the processor to acquire the information on the at least one alternative SECC by using the Inter-Supply Equipment Protocol (ISEP).

The instruction causing the processor to generate information on the at least one alternative SECC when a pairing with the EV fails may include instructions causing the processor to examine SECC information included in an event announcement message that is broadcast by each of the at least one other SECC.

The information on the at least one alternative SECC may include at least one of: a service set identifier (SSID), a basic service set identifier (BSSID), or a pair of IP address and port number.

The ISEP may include at least one of: a proactive type message, a reactive type message, or a triggering type message.

The reactive type message may be optionally used when the proactive type message cannot fix a pairing failure.

The triggering type message may be used when a pairing signal is generated by an electric vehicle supply equipment (EVSE).

According to yet another aspect of an exemplary embodiment, a power transfer control method performed by an electric vehicle (EV) includes: performing an initiation of a charging session with a supply equipment communication controller (SECC); exchanging pairing messages with the SECC; receiving a pairing response message related to a pairing result from the SECC; when a pairing with the SECC fails, extracting information on at least one alternative SECC included in the pairing response message; and attempting the pairing with another SECC by using the information on the alternative SECC.

The information on the at least one alternative SECC may be acquired through communications between a plurality of SECCs using an Inter-Supply Equipment Protocol (ISEP).

The ISEP may include at least one of: a proactive type message, a reactive type message, or a triggering type message.

The reactive type message may be optionally used when the proactive type message cannot fix a pairing failure.

The triggering type message may be used when a pairing signal is generated by an electric vehicle supply equipment (EVSE).

### ADVANTAGEOUS EFFECTS

According to an exemplary embodiment of the present disclosure, the electric vehicle may establish a pairing with an alternative supply device by using the information on the alternative supply device when the electric vehicle fails in the pairing with a certain supply device.

As a result, the exemplary embodiment of the present disclosure enables a stable pairing and power supply between electric vehicles and the supply device.

### DESCRIPTION OF DRAWINGS

FIG. 1 is a conceptual diagram illustrating an EV conductive charging system to which an exemplary embodiment of the present disclosure may be applied;
FIG. 2 is a conceptual diagram illustrating a wireless power transfer (WPT) system to which an exemplary embodiment of the present disclosure may be applied;
FIG. 3 illustrates communication schemes that may be used to control an electric vehicle power transfer according to an exemplary embodiment of the present disclosure;
FIG. 4A is a sequence diagram showing an example of a successful pairing procedure for the power transfer;
FIG. 4B is a sequence diagram showing an example of an unsuccessful pairing procedure for the power transfer;
FIG. 5 is a sequence diagram showing a pairing method according to an exemplary embodiment of the present disclosure;
FIG. 6 illustrates an example of a hierarchical SECC arrangement architecture suitable for implementing the pairing method according to an exemplary embodiment of the present disclosure;
FIG. 7A shows a format of an ISEP event announcement message according to an exemplary embodiment of the present disclosure;
FIG. 7B shows formats of ISEP event request and response messages according to an exemplary embodiment of the present disclosure;
FIG. 7C shows formats of triggering event request and response messages according to an exemplary embodiment of the present disclosure;
FIG. 8 is a sequence diagram showing a pairing method using proactive messages according to an exemplary embodiment of the present disclosure;
FIG. 9 is a flowchart illustrating a pairing control method according to an exemplary embodiment of the present disclosure;
FIG. 10 is a flowchart illustrating a charging control method according to an exemplary embodiment of the present disclosure; and
FIG. 11 is a block diagram of a power transfer control apparatus according to an exemplary embodiment of the present disclosure.

### BEST MODE

For a more clear understanding of the features and advantages of the present disclosure, exemplary embodiments of the present disclosure will be described in detail with reference to the accompanied drawings. However, it should be understood that the present disclosure is not limited to particular embodiments and includes all modifications, equivalents, and alternatives falling within the idea and scope of the present disclosure. In describing each drawing, similar reference numerals have been used for similar components.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components.

The terminology used herein is for the purpose of describing particular embodiments only and is not intended to be limiting of the disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with meanings in the context of related technologies and should not be interpreted as having ideal or excessively formal meanings unless explicitly defined in the present application.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator. The EV may be a four or more wheeled vehicle manufactured for use primarily on public streets or roads.

The EV may include an electric vehicle, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in Vehicle (PV)": An electric vehicle rechargeable through wireless charging from an electric vehicle supply equipment (EVSE) without using a physical plug or a physical socket.

"Heavy duty vehicle (H.D. Vehicle)": Any four-or more wheeled vehicle defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads, and highways and rated at less than 4,545 kg gross vehicle weight.

"Wireless power charging system (WCS)": A system for wireless power transfer and control of interactions including operations for an alignment and communications between a ground assembly (GA) and a vehicle assembly (VA).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or PEV communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly capable of transferring power. The automatic charging may be performed after obtaining necessary authentication and access.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the coil in a ground assembly (GA) coil and the coil in a vehicle assembly (VA) coil that allows power to be transferred with galvanic isolation.

"Inductive coupling": A magnetic coupling between two coils. One of the two coils may refer to the ground assembly (GA) coil, and the other one of the two coils may refer to the vehicle assembly (VA) coil.

"Ground assembly (GA)": An assembly on the ground or infrastructure side including the GA coil, a power/frequency conversion unit, and GA controller as well as the wiring from the grid and between each unit, filtering circuits, housing(s) etc., necessary to function as the power source of wireless power charging system. The GA may include components suitable for controlling impedances and resonant frequencies including ferrites and electromagnetic shielding materials for enhancing magnetic flus paths.

"Vehicle assembly (VA)": An assembly within the vehicle including the VA coil, rectifier/power conversion unit and VA controller as well as the wiring to the vehicle batteries and between each unit, filtering circuits, housing(s), etc., necessary to function as the vehicle part of a wireless power charging system. The VA may include components suitable for controlling impedances and resonant frequencies including ferrites and electromagnetic shielding materials for enhancing magnetic flus paths.

The GA may be referred to as a supply device, a primary device, and so on, and the VA may be referred to as an EV device, a secondary device, and so on.

"Primary device": An apparatus which provides a contactless coupling to the secondary device. In other words, the primary device may be an apparatus extraneous to an EV. When the EV is receiving power, the primary device may act as a source of the transferred power. The primary device may include the housing and all covers.

"Secondary device": An apparatus mounted within the EV which provides the contactless coupling to the primary device. In other words, the secondary device may be installed within the EV. When the EV is receiving power, the secondary device may transfer the power from the primary to the EV. The secondary device may include the housing and all covers.

"GA controller": A portion of the GA which regulates the output power level to the GA coil based on information from the vehicle.

"VA controller": A portion of the VA which monitors certain in-vehicle parameters during charging and initiates communication with the GA to adjust an output power level.

The GA controller may be referred to as a primary device communication controller (PDCC), and the VA controller may be referred to as an electric vehicle communication controller (EVCC).

"Magnetic gap": A vertical distance between the plane of the higher of the top of the litz wire or the top of the magnetic material in the GA coil to the plane of the lower of the bottom of the litz wire or the magnetic material in the VA coil when aligned.

"Ambient temperature": A ground-level temperature of the air measured at the subsystem under consideration and not in direct sun light.

"Vehicle ground clearance": A vertical distance between the ground surface and the lowest part of the vehicle floor pan.

"Vehicle magnetic ground clearance": A vertical distance between the plane of the lower of the bottom of the litz wire or the magnetic material in the VA Coil mounted within a vehicle to the ground surface.

"VA Coil magnetic surface distance": A distance between the plane of the nearest magnetic or conducting component surface to the lower exterior surface of the VA coil when mounted. This distance includes any protective coverings and additional items that may be packaged in the VA Coil enclosure.

The VA coil may be referred to as a secondary coil, a vehicle coil, or a receive coil. Similarly, the GA coil may be referred to as a primary coil, or a transmit coil.

"Exposed conductive component": A conductive component of electrical equipment (e.g. an electric vehicle) that may be touched and which is not normally energized but which may become energized in case of a fault.

"Hazardous live component": A live component, which under certain conditions may output a harmful electric shock.

"Live component": Any conductor or conductive component intended to be electrically energized in normal use.

"Direct contact": A contact of persons with live components. (See IEC 61440)

"Indirect contact": A contact of persons with exposed, conductive, and energized components made live by an insulation failure. (See IEC 61140)

"Alignment": A process of detecting a relative position of primary device to secondary device and/or detecting the relative position of secondary device to primary device for the efficient power transfer that is specified. In the present disclosure, the alignment may direct to a fine positioning of the wireless power transfer system.

"Pairing": A process by which a vehicle is correlated with the unique dedicated primary device, at which it is located and from which the power will be transferred. Pairing may include the process by which a VA controller and a GA controller of a charging spot are correlated. The correlation/association process may include the process of establishing a relationship between two peer communication entities.

"High level communication (HLC)": A particular type of digital communication. The HLC is necessary for additional services which are not covered by command & control communication. The data link of the HLC may use a power line communication (PLC), but it is not limited.

"Low power excitation (LPE)": A technique of activating the primary device for the fine positioning and pairing to allow the EV to detect the primary device, and vice versa.

"Service set identifier (SSID)": A unique identifier consisting of 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Since the SSID is shown as plain text, it may not provide any security features to the network.

"Extended service set identifier (ESSID)": A name of a network to which one desires to connect. It is similar to SSID but may be a more extended concept.

"Basic service set identifier (BSSID)": The BSSID typically consists of 48bits and is used to distinguish a specific BSS. In the case of an infrastructure BSS network, the BSSID may be a medium access control (MAC) of the AP equipment. For an independent BSS or ad hoc network, the BSSID may be generated with any value.

A charging station may include at least one GA and at least one GA controller configured to manage the at least one GA. The GA may include at least one wireless communication device. The charging station may refer to a location having at least one GA, which is installed in home, office, public place, road, parking area, etc.

Hereinbelow, exemplary embodiments of the present disclosure will be described in detail with reference to the accompanying drawings.

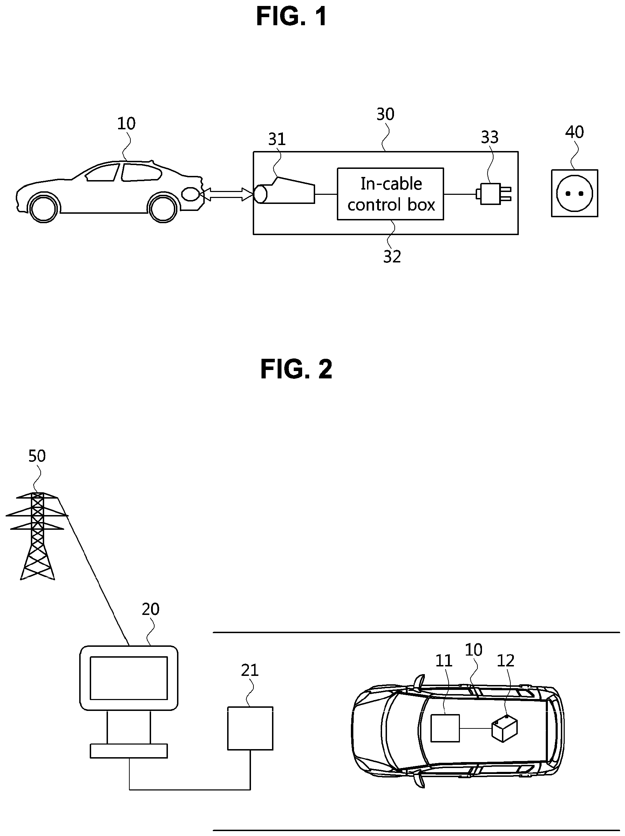

FIG. 1 is a conceptual diagram illustrating an EV conductive charging system to which an exemplary embodiment of the present disclosure may be applied.

As shown in FIG. 1, the EV conductive charging may be performed based on an interworking of an EV charging cable 30, an EV 10, and a power outlet 40 installed in an existing building or charging stand.

The EV 10 may be generally defined as an automobile that supplies an electric current from a rechargeable energy storage device such as a battery mounted on the EV 10 as an energy source of an electric motor.

The EV 10 may be a hybrid electric vehicle (HEV) having an electric motor as well as an internal combustion engine. Also, the EV 10 may be not only an automobile but also a motorcycle, a cart, a scooter, or an electric bicycle.

Further, the EV 10 according to the present disclosure may include an inlet for the conductive charging of its battery. Here, the EV 10 of which battery may be conductively charged may be referred to as a plug-in electric vehicle (PEV) as defined above.

The inlet provided in the EV 10 according to the present disclosure may support a slow charging or a rapid charging. Here, the EV 10 may include either a single inlet that supports both of the slow charging and the rapid charging through a single plug connection, or inlets that respectively support the slow charging and the rapid charging.

In addition, the EV 10 according to the present disclosure may further include an on-board charger (OBC) to support the slow charging by an alternating current (AC) power supplied from a general power system. The OBC may boost a level of the AC power supplied from the general power system and convert into a direct current (DC) power to supply the DC power to the battery of the EV 10 during the course of the slow charging. Accordingly, in case the AC power for the slow charging is supplied to the inlet of the EV 10, the slow charging may be performed through the OBC. Contrarily, in case the DC power for the rapid charging is supplied to the inlet of the EV 10, the rapid charging may be performed without an intervention of the OBC.

The EV charging cable 30 may include at least one of a charging plug 31 connected to the inlet of the EV 10, an outlet plug 33 connected to the outlet 40, or an in-cable control box (ICCB) 32.

The charging plug 11 may be a connection part that can be electrically connected to the inlet of the EV 10. The ICCB 12 may communicate with the EV 10 to receive status information of the EV or to control the electric power charging of the EV 10.

Although the ICCB 12 is illustrated as being included in the EV charging cable 10, the ICCB 12 may be mounted in a place other than the EV charging cable 10 or may be combined with an SECC described below or replaced by the SECC.

The outlet plug 13, which is suitable for being connected to the outlet of the charging stand to receive the power, may be an electrical connection member such as a general plug or a cord set.

The electric power outlet 30 may refer to an outlet installed at various places such as a parking lot attached to a house of an owner of the EV 10, a parking area for charging an EV at a gas station, or a parking area at a shopping center or an office building, for example.

In addition, a device referred to as a supply equipment communications controller (SECC) may be installed in a building or place (e.g., a charging stand) where the outlet 30 is installed to control a charging procedure by communicating with one of the components of the ICCB 12 or the EV 10 (e.g., electric vehicle communications controller (EVCC)).

The SECC may communicate with a power grid, an infrastructure management system that manages the power grid, a management server (hereinbelow, referred to as 'server') of the building in which the outlet 30 is installed, or an infrastructure server through wired or wireless communications.

The power outlet 40 may supply the AC power of the power system as it is. For example, the power outlet 40 may supply the AC power corresponding to at least one of single-phase twowire (1P2W) system or a three-phase four-wire (3P4W) system.

The EV charging cable 30 may support the slow charging and supply the electric power for the slow charging to the EV 10. The electric power supplied to the EV 10 for the slow charging may be in a range of 3.3 to 7.7 kWh.

The EV charging cable 30 may support the rapid charging and supply the electric power for the rapid charging to the EV 10. The electric power supplied to the EV 10 for the rapid charging may be in a range of 50 to 100 kWh.

FIG. 2 is a conceptual diagram illustrating a concept of a wireless power transfer (WPT) to which an exemplary embodiment of the present disclosure may be applied.

As shown in FIG. 2, a WPT may be performed by at least one component of an electric vehicle (EV) 10 and a charging station 20 and may be used for transferring power to the EV 10 without any wire.

Particularly, the EV 10 may be usually defined as a vehicle that supplies an electric power stored in the rechargeable energy storage including a battery 12 to an electric motor in a power train system of the EV 10.

The EV 10 according to an exemplary embodiment of the present disclosure may include a hybrid electric vehicle (HEV) having an electric motor as well as an internal combustion engine, and may include not only an automobile but also a motorcycle, a cart, a scooter, and an electric bicycle.

The EV 10 may include a power reception pad 11 that has a reception coil suitable for receiving the electric power for charging the battery 12 wirelessly or and may include a plug receptacle suitable for receiving the electric power for conductively charging the battery 12. In particular, the EV 10 configured for conductively charging the battery 12 may be referred to as a plug-in electric vehicle (PEV).

The charging station 20 may be connected to the power grid 50 or a power backbone, and may provide the AC power to a power transmission pad 21 having a transmission coil via a power link.

The charging station 20 may communicate with the power grid 50, or the infrastructure management system or an infrastructure server that manages the power grid, and may be configured to perform wireless communications with the EV 10.

The wireless communications may be performed through Bluetooth, Zigbee, cellular, wireless local area network (WLAN), or the like.

Additionally, the charging station 20 may be located at various places including a parking area attached to the owner's house of the EV 10, a parking area for charging an EV at a gas station or the like, a parking area at a shopping center or a workplace, but is not limited thereto.

The wireless power transfer to the battery 12 of the EV 10 may be performed as follows. First, the power reception pad 11 of the EV 10 is disposed in an energy field generated by the power transmission pad 21. Then the reception coil in the power reception pad 21 and the transmission coil in the power transmission pad 11 are coupled to and interacts each other. An electromotive force may be induced in the power reception pad 11 as a result of the coupling or the interaction, and the battery 12 may be charged by the induced electromotive force.

The charging station 20 and the power transmission pad 21 as a whole or in part may be referred to as the ground assembly (GA), of which meaning and function were defined above.

Also, all or part of the power reception pad 11 and other internal components of the EV 10 may be referred to as the vehicle assembly (VA), of which meaning and function were defined above.

The power transmission pad or the power reception pad may be configured to be non-polarized or polarized.

In case the pad is non-polarized, there is one pole in a center of the pad and an opposite pole around an external periphery of the pad. The magnetic flux may be formed to exit from the center of the pad and return to external boundaries of the pad.

In case the pad is polarized, the pad may have respective poles at opposite end portions of the pad. The magnetic flux may be formed based according to an orientation of the pad.

Meanwhile, according to ISO 15118 which is a communication standard for the electric vehicle charging, the EV and EV supply equipment (EVSE) control an entire charging process by exchanging messages. That is, an electric vehicle communication controller (EVCC) and a supply equipment communication controller (SECC) may perform communications for charging the EV.

Before the communications, the EV first authenticates the EVSE to ensure that the EVSE is a trusted entity approved by a trust anchor, and establishes a secure channel with the EVSE to protect the communications from an unauthorized access. The security may be ensured by a Transport Layer Security (TLS) which is a standard protocol defined in IETF RFC 5246. The TLS session may be established by a TLS session establishment procedure after an IP-based communication is established. The security of the TLS relies on the trust of the EV for the trusted operator to which the EVSE charger belongs.

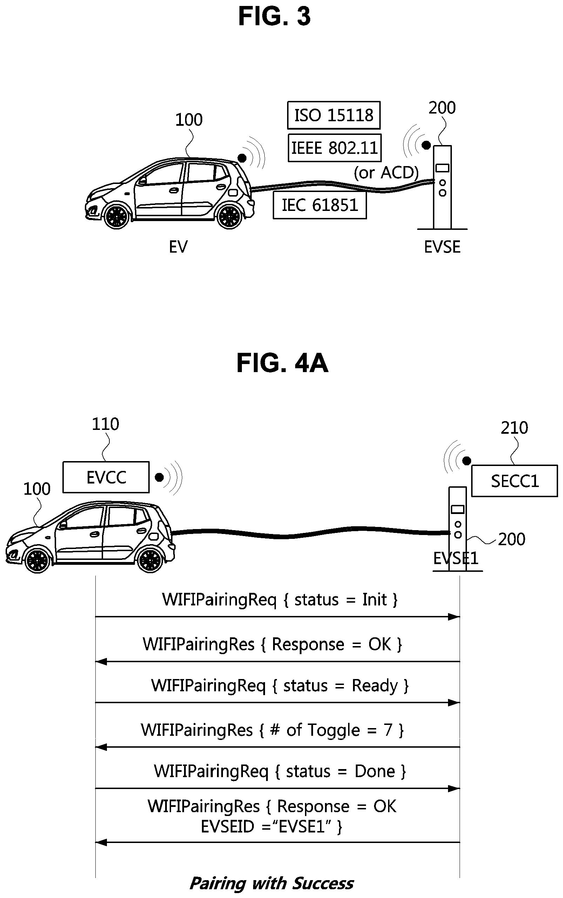

FIG. 3 illustrates communication schemes that may be used to control an electric vehicle power transfer according to an exemplary embodiment of the present disclosure.

According to industrial standard documents for electric vehicle charging communications (e.g., ISO 15118-8 and 15118-20), when wireless communications are used for electric vehicle charging, the communications between the electric vehicle communication controller (EVCC) and the supply equipment communication controller (SECC) may conform to IEEE standard 802.11. That is, the EV power transfer may involve communications between the EVCC and the SECC. In this case, one SECC may be provided for each EVSE, or a single SECC may be provided for a plurality of EVSEs.

In addition, the conductive power transfer through a wired cable may comply with an IEC 61851 standard.

On the other hand, the wireless power transfer process performed between the VA (i.e., EVCC) and the GA (i.e., SECC) may include a WPT WLAN discovery operation, wireless communication association and charging spot discovery operations, positioning, authentication, authorization, and fine alignment operations, a pairing operation, an alignment check and WPT preparation operations, and a WTP operation.

The pairing is a procedure to check that the EVCC is communicating with a correct SECC for the charging and is performed between the EVCC and the SECC. The pairing may be required for both the conductive power transfer and the wireless power transfer. However, the detailed procedure for the pairing in the conductive power transfer may be different from that in the wireless power transfer.

FIG. 4A is a sequence diagram showing an example of a successful pairing procedure for the power transfer.

FIG. 4A shows an example in which one EVSE and one SECC are used in a conductive power transfer environment. That is, a first EVSE (EVSE1) communicates with the EVCC through a first SECC (SECC1) allocated to the first EVSE (EVSE1).

Referring to FIG. 4A, the pairing procedure is performed through a WIFI pairing request and response (WIFIPairingReq/Res) message loop, in which the EVCC transmits WIFI pairing request (WIFIPairingReq) messages to the first SECC (SECC1), and the first SECC (SECC1) of the first EVSE (EVSE1) sends WIFI pairing response (WIFIPairingRes) messages to the EVCC in response to the WIFIPairingReq messages.

The WiFiPairingReq message sent by the EVCC to the SECC may include parameters related to a pairing status ('PairingStatus'). In addition, the WiFiPairingRes message sent by the SECC to the EVCC may include parameters such as 'EVSEProcessing', 'Number Of Toggles', 'ResponseCode', and 'EVSEID'.

The probability of a successful pairing may be high in case that there is one EVSE and one SECC corresponding the EVSE as shown in FIG. 4A.

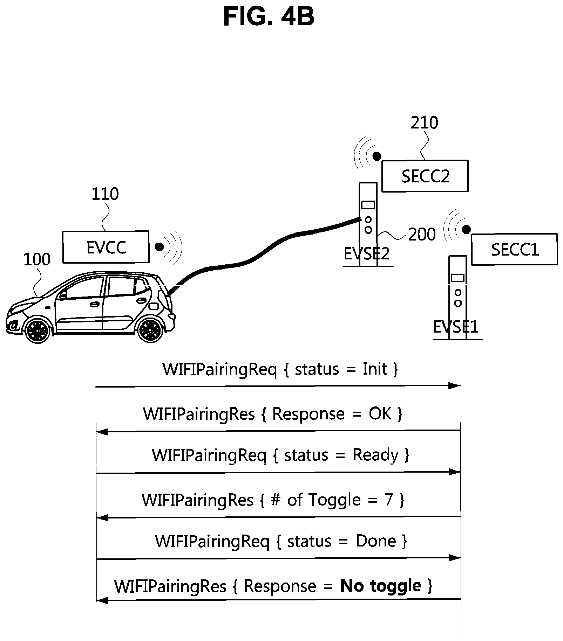

FIG. 4B is a sequence diagram showing an example of an unsuccessful pairing procedure for the power transfer.

In the example shown in FIG. 4B, there exist two EVSEs and two SECCs corresponding to respective EVSEs located near the EV in the conductive power transfer environment.

Referring to FIG. 4B, the pairing procedure is performed through the WIFIPairingReq/Res message loop, similarly to the example of FIG. 4A, in which the EVCC transmits the WIFIPairingReq messages to the first SECC (SECC1), and the first SECC (SECC1) of the first EVSE (EVSE1) sends the WiFiPairingRes messages to the EVCC in response to the WIFIPairingReq messages.

A probability that the pairing fails may increase when there exist a plurality of SECCs capable of communicating with the EVCC as shown in FIG. 4B.

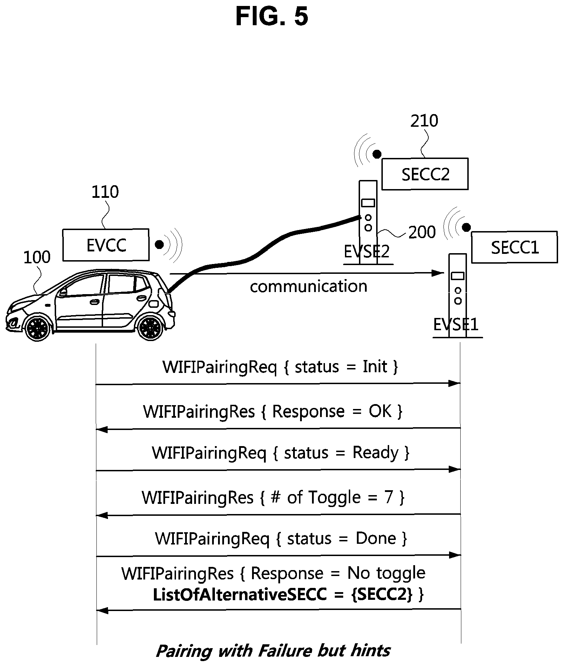

FIG. 5 is a sequence diagram showing a pairing method according to an exemplary embodiment of the present disclosure.

In the example shown in FIG. 5, there exist two SECCs capable of communicating with the EVCC in the vicinity of the EVCC. The probability that the pairing fails may increase when there exist a plurality of SECCs capable of communicating with the EVCC as described above with reference to FIG. 4B, but the present disclosure provides a solution to solve the problem.

When the EVCC attempted the WiFi pairing with the first SECC (SECC1) but the pairing was failed, the first SECC (SECC1) may send the WiFiPairingRes message including a parameter "Response = No toggle" to indicate the failure. At this time, however, the first SECC (SECC1) may compose the WiFiPairingRes message indicating an alternative SECC that can be paired with the EVCC instead of the first SECC (SECC1) in a format such as "ListOfAlternativeSECCs = SECC2" and transmit the WiFiPairingRes message to the EVCC.

In other words, the first SECC (SECC1) having determined the failure of the pairing with EV may provide the EVCC with a hint for the success in the pairing.

To summarize, the WiFiPairingRes message according to an exemplary embodiment of the present disclosure may include the ListOfAlternativeSECCs parameter.

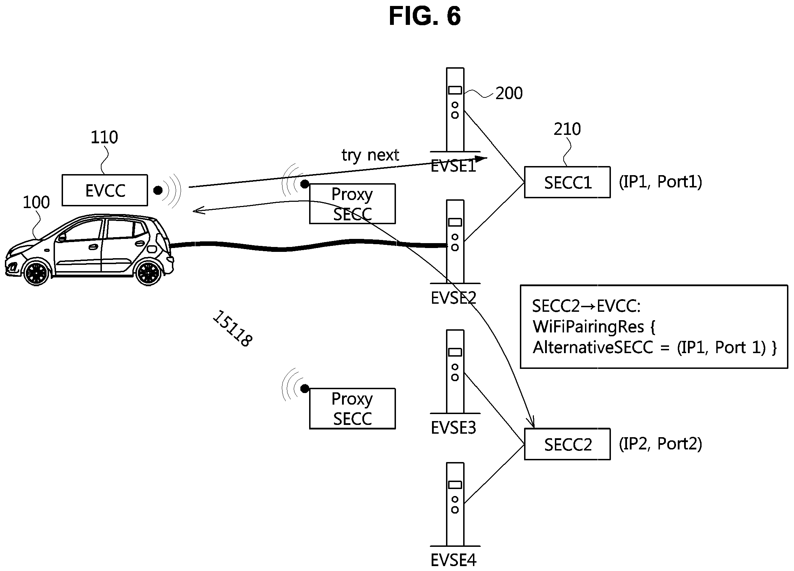

FIG. 6 illustrates an example of a hierarchical SECC arrangement architecture suitable for implementing the pairing method according to an exemplary embodiment of the present disclosure.

Referring to FIG. 6, the SECC arrangement architecture according to an exemplary embodiment of the present disclosure may include one or more proxy SECCs. Each of the proxy SECCs may communicate with one or more SECCs (e.g., SECC1 and SECC2) associated with the EVSEs. Each SECC may transmit its information to the proxy SECC and receive information on other SECCs located in its vicinity through the proxy SECC.

For example, after the pairing procedure between of the EVCC and the second SECC (SECC2) failed, the information of the first SECC (SECC1) including a pair of IP address and port number may be provided to the EVCC, as information about the alternative SECC, through the proxy SECC. Upon receiving the information about the alternative SECC, the EVCC may select the first SECC (SECC1) corresponding to alternative SECC information (IP1, port 1) as a next pairing partner.

According to an exemplary embodiment of the present disclosure, a ListOfAlternativeSECCs parameter may be added to the WiFiPairingRes message to provide information useful for finding a SECC that controls the EVSE where the EV is plugged in or the EV is parked.

At this time, the WiFiPairingReq message transmitted by the EVCC to the SECC may include a parameter indicating a pairing status, i.e. PairingStatus. The PairingStatus parameter may have a value selected from a set PairingStatus={"Init", "EV_Ready_To_Toggle", "End_Of_Toggle"}.

In addition, the WiFiPairingRes message may include parameters such as EVSEProcessing, Number_Of Toggles, ResponseCode, and EVSEID. The EVSEProcessing parameter may have a value selected from a set of {"Ongoing", "Finished"}. The Number _Of Toggles parameter may have an integer value. The ResponseCode parameter may have a value selected from a set of {"OK", "Failed_Wrong_Number_of_Toggles", "Failed _No_StateB"}. The EVSEID parameter may have a value in the form of a string.

The WiFiPairingRes message according to an exemplary embodiment of the present disclosure may also include the ListOfAlternativeSECCs parameter as mentioned above. The ListOfAlternativeSECCs parameter may include a list of information of SECCs in the order of higher probability of the success in the pairing. The information of each SECC in the ListOfAlternativeSECCs parameter may include a SSID, a BSSID, and the pair of IP address and port number. The basic service set identifier (BSSID) is a MAC address of the WiFi interface of the SECC. When several SECCs use the same SSID in one charging station, the SECCs may be identified using the BSSID.

In other words, the ListOfAlternativeSECC parameter may provide the list of all SECCs recommended for the EV to connect in the order of their priorities when the pairing process with the current SECC fails. In case that the ListOfAlternativeSECCs parameter is not provided, the values of the SSID, the BSSID, and the pair of IP address and port number may be filled with NULL or empty spaces.

When the list of alternative SECCs are given, the EV may connect to the SECCs in the given order. For example, the EV may connect to a wireless network using the provided SSID and initiate a Session Description Protocol (SDP) or connect directly to the SECC with the provided IP address and port number.

In case that the SECC needs more time to prepare the ListOfAlternativeSECCs information, the SECC may have to transmit the WiFiPairingRes message by setting the EVSEProcessing parameter to "Ongoing" and setting the ResponseCode parameter to a value other than "OK".

Meanwhile, there exists a similar pairing mechanism for the wireless power transfer (WPT). That is, the EVCC and the SECC may check whether the EV is communicating with the SECC that controls the primary core where the EV is located through the pairing request and response messages in case of the wireless power transfer.

There may be two types of pairing: one initiated by signaling by the EV and the other one initiated by signaling by the EVSE. In case of the pairing initiated by signaling by the EV, when the SECC receives a signal from the EV, the SECC shares the signal with another SECC. However, such a mechanism cannot be used in case of the pairing initiated by signaling by the EVSE.

Accordingly, in another embodiment of the present disclosure, the ListOfAlternativeSECCs parameter may be added as an option to the PairingRes message used for the WPT pairing.

The ListOfAlternativeSECCs parameter may include the list of the SSID, the BSSID, and the pair of IP address and port number of the SECCs in the order of higher probability of the success in the pairing. In case that the ListOfAlternativeSECCs parameter is not provided, the values of the SSID, the BSSID, and the pair of IP address and port number may be filled with NULL or empty spaces.

To summarize, in the case of the conductive power transfer, i.e., the wired power transfer using a power cable, the ListOfAlternativeSECCs parameter may be added to the WiFiPairingRes message. In the case of the inductive power transfer, i.e., the wireless power transfer, the ListOfAlternativeSECCs parameter may be added to the PairingRes message. The ListOfAlternativeSECCs parameter added to the WiFiPairingRes message or the PairingRes message may include the list of the SSID, the BSSID, or the pair of IP address and port number of the SECCs in the order of the higher probability of the success in the pairing, and the information of each SECC in the ListOfAlternativeSECCs parameter may be applied selectively.

On the other hand, according to another exemplary embodiment of the present disclosure, the current SECC may find out which SECC the EV is connected to or whether the EV is parked on a wrong EVSE.

For this purpose, proprietary communications between the SECCs may be necessary. A communication scheme for such proprietary communications between the SECCs is referred to as "Inter-Supply Equipment Protocol (ISEP)" in the present specification. The ISEP protocol may generally include the following three types of messaging:
- a proactive message: broadcasting message for the SECCs to announce observed events such as BCB toggles (in case of conductive power transfer) or signal values (in case of inductive power transfer);
- a reactive message: broadcast-response message for an SECC to find out possible correct SECC that received a particular BCB toggle or signal; and
- a triggering message: message that an SECC requests other SECCs to generate signal to the EV for the pairing purpose.

The ISEP according to an exemplary embodiment of the present disclosure may be implemented using a Universal Datagram Protocol (UDP). Each SECC may open a predefined UDP port (e.g., 151182) to be used for the ISEP. The ISEP may use JavaScript Object Notation (JSON) as an encoding scheme.

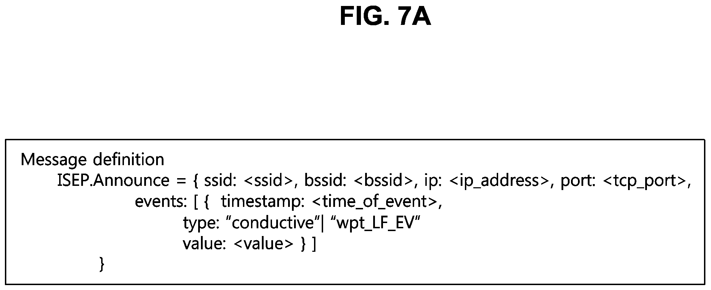

FIG. 7A shows a format of an ISEP event announcement message according to an exemplary embodiment of the present disclosure.

The ISEP event announcement message shown in FIG. 7A is an example of a proactive ISEP message and may use a broadcast-based UDP protocol.

Each SECC announces a list of BCB toggle/signal events that cannot be linked to any ongoing session of its own through the ISEP event announcement message. An AnnouncePeriod parameter may indicate a cancellation value of a period in which each SECC announces the event list. The SECC receiving the ISEP event notification message may use the received information to recommend to try with an alternative wireless network or the pair of IP address and port number of a SECC to the EV that has failed the pairing.

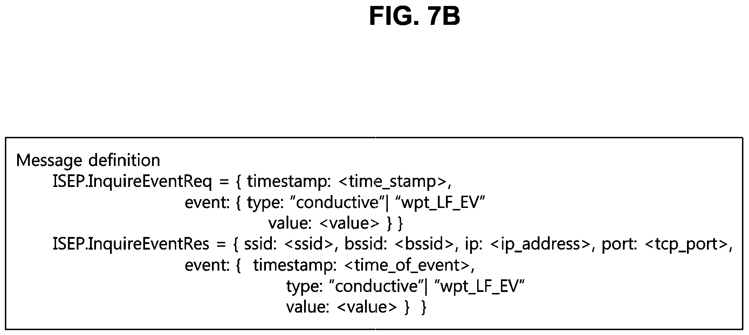

FIG. 7B shows formats of ISEP event request and response messages according to an exemplary embodiment of the present disclosure.

The ISEP event request and response messages shown in FIG. 7B are examples of a reactive ISEP message.

The reactive ISEP message may be optional and may be sent only when the proactive message cannot solve the issue. The reactive message may also use the broadcast-response UDP protocol. One SECC may broadcast an inquiry for a specific event, and another SECC receiving the inquiry may respond to the SECC having broadcast the inquiry by sending a unicast message if the SECC has observed a toggle event matching the inquiry but not tied to any ongoing session of its own.

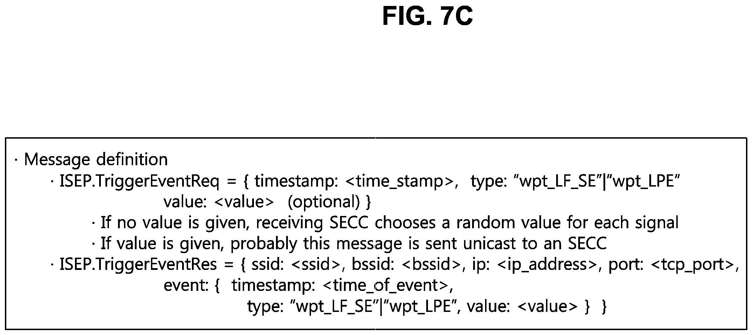

FIG. 7C shows formats of triggering event request and response messages according to an exemplary embodiment of the present disclosure.

The triggering event request and response messages shown in FIG. 7C are examples of a triggering ISEP message. The triggering messages may be used only when the pairing signal should be generated by the EVSE (for example, in case of a low power excitation (LPE) pairing).

The triggering request and response messages may be in the form of a broadcast-response message, but may be in the form of a unicast-response message as well. More specifically, a first SECC may broadcast a request to send a signal to the EV using a randomly chosen value. Upon receiving the request, one or more second SECCs may send a signal with a random value at each unused EVSE of its own, and then may respond to the first SECC by sending a unicast message indicating the value used for the signal. In addition, the first SECC may unicast a request to transmit a signal to the EV using the value specified by the second SECC. Upon receiving the request, the second SECC may transmit a signal to the EV using the specified value and respond to the first SECC.

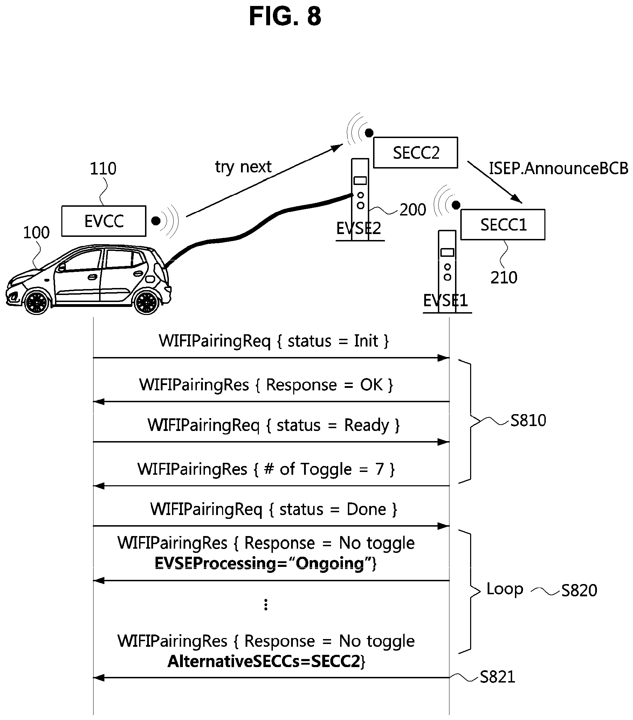

FIG. 8 is a sequence diagram showing a pairing method using the proactive messages according to an exemplary embodiment of the present disclosure.

After a charging session is started, the EVCC may transmit the WiFiPairingRes message or the PairingRes message to the SECC according to the charging type. If the messages were exchanged according to the pairing loop but the pairing failed, the EVCC receives an incorrect toggle or signal from the SECC (S820). At this time, the SECC may examine the ISEP.AnnounceEvents messages acquired and maintained through the ISEP message exchanges with other SECCs in the vicinity. The SECC may examine recent events included in the messages, create the list including the SSID, the BSSID, or the pair of IP address and port number of the SECCs, and provide the WiFiPairingRes or PairingRes message including the list to the EVCC (S821).

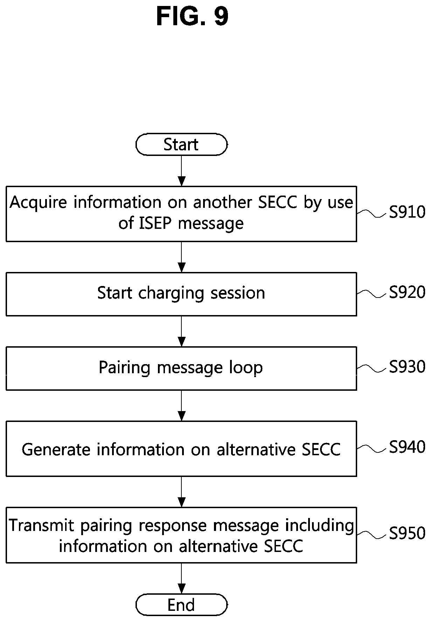

FIG. 9 is a flowchart illustrating a pairing control method according to an exemplary embodiment of the present disclosure.

The pairing control method shown in FIG. 9 may be performed by the supply equipment communication controller (SECC) or the electric vehicle supply equipment (EVSE) controlling the power transfer to an electric vehicle.

In the pairing control method according to the present disclosure, an operation S910 that the SECC acquires information on at least one of another SECCs using the ISEP message may be preceded. The procedure of acquiring the information on the other SECCs may be performed periodically or aperiodically as needed using the ISEP message exchanged between the SECCs as described above with reference to FIGS. 7A through 8.

The ISEP message may include at least one of a proactive type message, a reactive type message, or a triggering type message. The reactive type message may be used optionally when the problem cannot be solved with the proactive message. The triggering type message may be used when the pairing signal is generated the EVSE.

After the charging session is started (S920), the SECC may exchange one or more pairing messages with the electric vehicle (S930).

When the pairing with the electric vehicle fails, the SECC may generate information on one or more alternative SECCs (S940) and transmit the pairing response message including the information on the alternative SECCs to the electric vehicle (S950). When generating the information on the alternative SECCs, the SECC may examine the information on the other SECC included in the event notification message that is broadcast by each SECC. At this time, the information on the other SECC may include one or more of the SSID, the BSSID, or the pair of IP address and port number of the corresponding SECC.

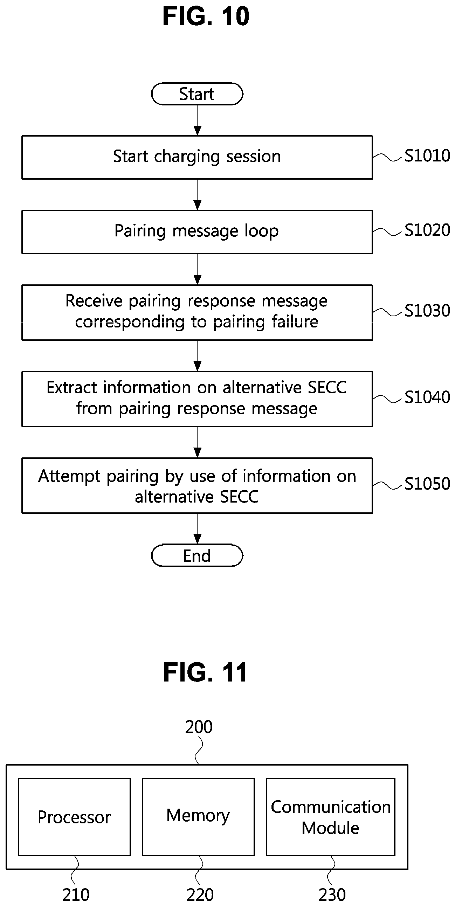

FIG. 10 is a flowchart illustrating a charging control method according to an exemplary embodiment of the present disclosure.

The charging control method shown in FIG. 10 may be performed by the electric vehicle communication controller (EVCC) or the electric vehicle.

The electric vehicle may perform a charging session initiation procedure with the SECC (S1010), and may exchange pairing messages with the SECC (S1020).

Afterwards, the electric vehicle may receive a pairing response message related to a pairing result from the SECC (S1030). In case that the pairing failed, the electric vehicle may extract information on one or more alternative SECCs included in the pairing response message (S 1040).

Here, the information on the other SECC may include one or more of the SSID, the BSSID, or the pair of IP address and port number of the corresponding SECC. Meanwhile, the information on other SECCs may be obtained through communications between a plurality of SECCs using the Inter-Supply Equipment Protocol (ISEP).

The ISEP message may include at least one of the proactive type message, the reactive type message, or the triggering type message. The reactive type message may be used optionally when the problem cannot be solved with the proactive message. The triggering type message may be used when the pairing signal is generated the EVSE.

Next, the electric vehicle may attempt the pairing with another SECC by using the information on the alternative SECC (S1050).

FIG. 11 is a block diagram of a power transfer control apparatus according to an exemplary embodiment of the present disclosure.

The power transfer control apparatus 200 shown in FIG. 11 may be the supply equipment communication controller (SECC) or the electric vehicle supply equipment (EVSE). In this specification, the components of the power transfer control apparatus 200 are not limited to their names, but may be defined by their functions. Also, a plurality of the functions may be performed by a component, and a plurality of the components may perform one of the functions.

The power transfer control apparatus 200 may include at least one processor 210, a memory 220 for storing at least one program instruction to be executed by the processor 210, and a communication module 230.

The processor 210 may execute the program instructions stored in the memory 220. The processor 210 may include a central processing unit (CPU) or a graphics processing unit (GPU), or may be implemented by another kind of dedicated processor suitable for performing the methods of the present disclosure. The memory 220 may include, for example, a volatile memory such as a read only memory (ROM) and a nonvolatile memory such as a random access memory (RAM).

The program instructions, when executed by the processor 210, may cause the processor 210 to perform an initiation of a charging session with the EV, exchange at least one pairing messages with the EV, generate information on at least one alternative SECC when a pairing with the EV fails, and transmit a pairing response message including the information on at least one alternative SECC to the EV.

Meanwhile, the communication module 230 may enable the power transfer control apparatus 200 to perform communications with the electric vehicle communication controller (EVCC). The communication module 230 may include a communication interface capable of performing WiFi communications, and may also include a communication interface capable of performing 3G communications and 4G communications.

The apparatus and method according to exemplary embodiments of the present disclosure may be implemented by computer-readable program codes or instructions stored on a non-transitory computer-readable recording medium. The non-transitory computer-readable recording medium includes all types of recording media storing data readable by a non-transitory computer system. The computer-readable recording medium may be distributed over computer systems connected through a network so that a computer-readable program or code may be stored and executed in a distributed manner.

The non-transitory computer-readable recording medium may include a hardware device specially configured to store and execute program commands, such as ROM, RAM, and flash memory. The program commands may include not only machine language codes such as those produced by a compiler, but also high-level language codes executable by a computer using an interpreter or the like.

Some aspects of the present disclosure have been described above in the context of a device but may be described using a method corresponding thereto. In particular, blocks or the device corresponds to operations of the method or characteristics of the operations of the method. Similarly, aspects of the present disclosure described above in the context of a method may be described using blocks or items corresponding thereto or characteristics of a device corresponding thereto. Some or all of the operations of the method may be performed, for example, by (or using) a hardware device such as a microprocessor, a programmable computer or an electronic circuit. In some exemplary embodiments, at least one of most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods of the present disclosure are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A pairing control method performed by a supply equipment communication controller (SECC) controlling a power transfer to an electric vehicle (EV), comprising:
performing an initiation of a charging session with the EV;
exchanging pairing messages with the EV;
generating information on at least one alternative SECC when a pairing with the EV fails; and
transmitting a pairing response message including the information on the at least one alternative SECC to the EV.

2. The pairing control method of claim 1, wherein the SECC communicates with at least one other SECC using an Inter-Supply Equipment Protocol (ISEP).

3. The pairing control method of claim 2, further comprising:
acquiring the information on the at least one alternative SECC by using the Inter-Supply Equipment Protocol (ISEP).

4. The pairing control method of claim 3, wherein generating information on the at least one alternative SECC when the pairing with the EV fails comprises:
examining SECC information included in an event announcement message that is broadcast by each of the at least one other SECC.

5. The pairing control method of claim 1, wherein the information on the at least one alternative SECC comprises at least one of: a service set identifier (SSID), a basic service set identifier (BSSID), or a pair of IP address and port number.

6. The pairing control method of claim 2, wherein the ISEP comprises at least one of: a proactive type message, a reactive type message, or a triggering type message.

7. The pairing control method of claim 6, wherein the reactive type message is used when the proactive type message cannot fix a pairing failure.

8. The pairing control method of claim 6, wherein the triggering type message is used when a pairing signal is generated by an electric vehicle supply equipment (EVSE).

9. A supply equipment communication controller (SECC) controlling a power transfer to an electric vehicle (EV), comprising:
a processor; and
a memory storing at least one instruction to be executed by the processor,
wherein the at least one instruction, when executed by the processor, causes the processor to:
perform an initiation of a charging session with the EV;
exchange at least one pairing messages with the EV;
generate information on at least one alternative SECC when a pairing with the EV fails; and
transmit a pairing response message including the information on the at least one alternative SECC to the EV.

10. The SECC as claimed in claim 9, wherein the SECC communicates with at least one other SECC using an Inter-Supply Equipment Protocol (ISEP).

11. The SECC as claimed in claim 10, wherein the at least one instruction comprises instructions, when executed by the processor, causing the processor to:
acquire the information on the at least one alternative SECC by using the Inter-Supply Equipment Protocol (ISEP).

12. The SECC as claimed in claim 11, wherein the instruction causing the processor to generate information on the at least one alternative SECC when a pairing with the EV fails comprises:
instructions causing the processor to:
examine SECC information included in an event announcement message that is broadcast by each of the at least one other SECC.

13. The SECC as claimed in claim 9, wherein the information on the at least one alternative SECC comprises at least one of: a service set identifier (SSID), a basic service set identifier (BSSID), or a pair of IP address and port number.

14. The SECC as claimed in claim 10, wherein the ISEP comprises at least one of: a proactive type message, a reactive type message, or a triggering type message.

15. The SECC as claimed in claim 14, wherein the reactive type message is used when the proactive type message cannot fix a pairing failure.

16. The SECC as claimed in claim 14, wherein the triggering type message is used when a pairing signal is generated by an electric vehicle supply equipment (EVSE).

17. A power transfer control method performed by an electric vehicle (EV), comprising:
performing an initiation of a charging session with a supply equipment communication controller (SECC);
exchanging pairing messages with the SECC;
receiving a pairing response message related to a pairing result from the SECC;
when a pairing with the SECC fails, extracting information on at least one alternative SECC included in the pairing response message; and
attempting the pairing with another SECC by using the information on the at least one alternative SECC.

18. The power transfer control method of claim 17, wherein the information on the at least one alternative SECC comprises at least one of: a service set identifier (SSID), a basic service set identifier (BSSID), or a pair of IP address and port number.

19. The power transfer control method of claim 17, wherein the information on the at least one alternative SECC is acquired through communications between a plurality of SECCs using an Inter-Supply Equipment Protocol (ISEP).

20. The power transfer control method of claim 19, wherein the ISEP comprises at least one of: a proactive type message, a reactive type message, or a triggering type message.

21. The power transfer control method of claim 20, wherein the reactive type message is used when the proactive type message cannot fix a pairing failure.

22. The power transfer control method of claim 20, wherein the triggering type message is used when a pairing signal is generated by an electric vehicle supply equipment (EVSE).
